# EUROPEAN PATENT APPLICATION

(11) **EP 3 232 706 A1**
(43) Date of publication of application: **18.10.2017**
(21) Application number: 14909375.9
(22) Date of filing: 30.12.2014
(51) Int. Cl.: H04W 24/10, H04W 72/04

(54) **MEASUREMENT METHOD AND DEVICE**

(71) Applicant: Huawei Technologies Co., Ltd., Longgang District Shenzhen, Guangdong 518129 (CN)
(72) Inventor: YANG, Xiaodong, Shenzhen Guangdong 518129 (CN); ZHANG, Jian, Shenzhen Guangdong 518129 (CN); LI, Bingzhao, Shenzhen Guangdong 518129 (CN); QUAN, Wei, Shenzhen Guangdong 518129 (CN); HU, Zhenxing, Shenzhen Guangdong 518129 (CN); MIAO, Jinhua, Shenzhen Guangdong 518129 (CN)
(74) Representative: Maiwald Patentanwalts GmbH
(86) International application number: PCT/CN2014/095594
(87) International publication number: WO 2016/106563

(57) **Abstract**

The present invention discloses a measurement method and a device, so as to resolve a problem that when an LTE network is deployed on an unlicensed spectrum, because a TDD cell and an FDD cell may use a same spectrum resource or contend for use of a spectrum resource, an RRM measurement result of UE is easily susceptible to a neighboring cell, causing low accuracy of the measurement result. The method includes: instructing, by a network device, user equipment to perform measurement by using an enhanced measurement manner; and receiving, by the network device, a measurement result reported by the user equipment, where the enhanced measurement manner is to perform measurement on a pre-specified measurement resource, or to perform measurement on measurement resources corresponding to at least two sets that are configured by the network device for the user equipment. An enhanced measurement manner is used, thereby improving accuracy of measurement and reliability of a measurement result.

## Description

### TECHNICAL FIELD

The present invention relates to the field of wireless communications technologies, and in particular, to a measurement method and a device.

### BACKGROUND

Spectrum management (spectrum management) is a spectrum planning method designed to effectively use radio frequency. In current spectrum management, spectrums are classified into licensed spectrums (licensed spectrum) and unlicensed spectrums (unlicensed spectrum). A licensed spectrum is a spectrum resource fixedly licensed for a mobile operator or a mobile technology (Universal Mobile Telecommunications System (Universal Mobile Telecommunications System, UMTS)/Long Term Evolution (Long Term Evolution, LTE)) to use. An unlicensed spectrum is a spectrum resource that can be shared by different wireless devices. Most WiFi devices work on an unlicensed spectrum. Unlicensed spectrums in China include 2.4 GHz to 2.4835 GHz, 5.725 GHz to 5.850 GHz, and the like.

As communications technologies develop rapidly, users have increasing demands for mobile broadband. A mobile operator requires more spectrum resources to meet users' requirements, so as to remedy a current situation that at present, a licensed spectrum cannot fully meet users' communication service requirements. Because currently a frequency band of an unlicensed spectrum has a relatively low utilization rate, an increasing number of mobile operators expect to use an unlicensed spectrum to provide users with communication services. For example, an operator expects that a 3^{rd} Generation Partnership (The 3^{rd} Generation Partnership, 3GPP) network (for example, LTE) can be deployed on an unlicensed spectrum, so that coordinated communication of the 3GPP network and an existing LTE network of the operator can be performed.

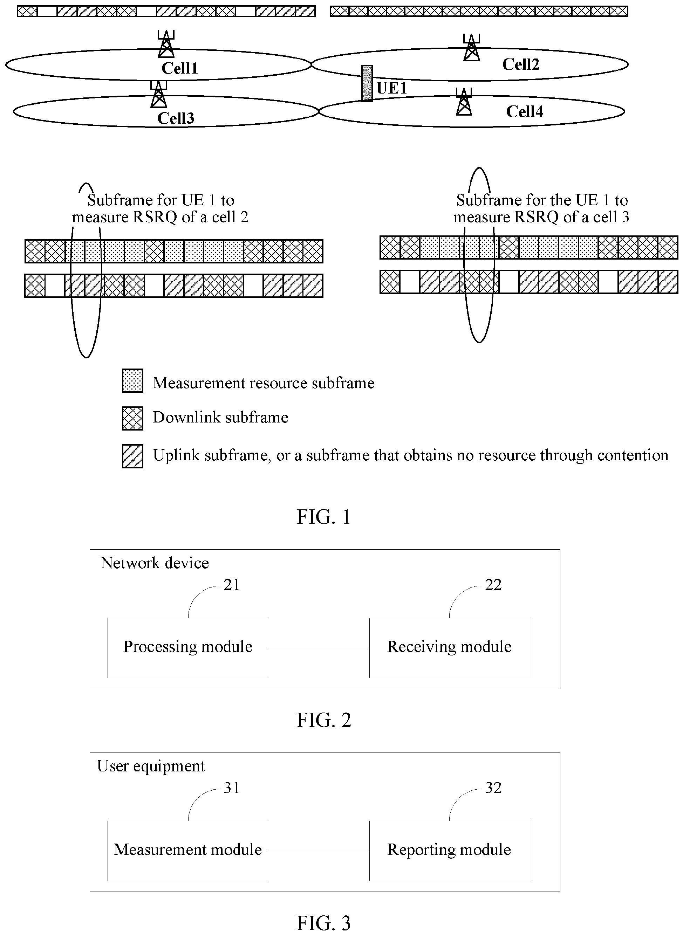

In an LTE system, to improve a spectrum utilization rate, and to prevent network congestion and maintain signaling load as light as possible, so as to ensure service quality of user equipment in a network, measurement of radio resource management (Radio Resource Management, RRM) usually requires to be performed. To deploy an LTE network on an unlicensed spectrum, a Time Division Duplex (Time Division Duplex, TDD) cell (Cell) and a Frequency Division Duplex (Frequency Division Duplex, FDD) cell may use a same spectrum resource, or contend for use of a spectrum resource. As a result, a measurement environment in which user equipment (User Equipment, UE) performs RRM measurement changes rapidly. In an existing LTE system, when UE performs RRM measurement, random sampling is performed, and in this case, it is highly likely that a measurement subframe sampled to perform measurement by the UE on a serving cell is a subframe that fails to obtain a resource through contention or an uplink subframe in a neighboring cell, causing low accuracy of a measurement result of the UE. As shown in FIG. 1, a cell 2 (Cell 2) and a Cell 4 are serving cells of UE 1, a Cell 1 is a neighboring cell of the Cell 2, and a Cell 3 is a neighboring cell of the Cell 4. As can be seen from the figure, when the UE 1 performs measurement in a measurement subframe in the Cell 2, the measurement subframe is a subframe that fails to obtain a resource through contention or an uplink subframe in the Cell 1. In this way, a measurement result obtained by the UE 1 is affected by a neighboring cell, causing low accuracy of the measurement result.

### SUMMARY

The present invention provides a measurement method and a device, so as to resolve a problem that when an LTE network is deployed on an unlicensed spectrum, because a TDD cell and an FDD cell may use a same spectrum resource or contend for use of a spectrum resource, an RRM measurement result of UE is easily susceptible to a neighboring cell, causing low accuracy of the measurement result.

According to a first aspect, a network device is provided, where the network device includes:
a processing module, configured to instruct user equipment to perform measurement by using an enhanced measurement manner, where the enhanced measurement manner is to perform measurement on a pre-specified measurement resource, or to perform measurement on measurement resources corresponding to at least two sets that are configured by the processing module for the user equipment; and
a receiving module, configured to receive a measurement result reported by the user equipment.

With reference to the first aspect, in a first possible implementation manner, if the enhanced measurement manner is to perform measurement on the pre-specified measurement resource, that the processing module instructs the user equipment to perform measurement by using the enhanced measurement manner includes:
carrying, in measurement information configured for the user equipment, instruction information used to instruct the user equipment to perform measurement on the pre-specified measurement resource.

With reference to the first possible implementation manner of the first aspect, in a second possible implementation manner, at least one subframe in which the pre-specified measurement resource is located is:
all subframes within a specified measurement period; or,
some consecutive subframes within a specified measurement period; or,
an even-numbered subframe within a specified measurement period; or,
an odd-numbered subframe within a specified measurement period; or,
subframes separated by a specified interval within a specified measurement period; or,
a specified subframe within each sub-period within a specified measurement period, where the measurement period is divided into at least two sub-periods according to a specified time interval.

With reference to the first aspect, in a third possible implementation manner, values of interference to a serving cell from a neighboring cell on measurement resources corresponding to different sets of the at least two sets belong to different interference ranges.

With reference to the first aspect, or any one manner of the first to the third possible implementation manners of the first aspect, in a fourth possible implementation manner, that the processing module configures at least two sets for the user equipment includes:
configuring at least two sets for serving cells on a same frequency of the user equipment; or,
configuring at least two sets for all serving cells on different frequencies of the user equipment; or,
configuring at least two sets for each serving cell on different frequencies of the user equipment.

With reference to the first aspect, or any one manner of the first to the fourth possible implementation manners of the first aspect, in a fifth possible implementation manner, that the processing module configures at least two sets for the user equipment includes:
configuring at least two sets for neighboring cells on a same frequency of the user equipment; or,
configuring at least two sets for all neighboring cells on different frequencies of the user equipment; or,
configuring at least two sets for each neighboring cell on different frequencies of the user equipment.

With reference to the first aspect, or any one manner of the first to the fifth possible implementation manners of the first aspect, in a sixth possible implementation manner, the at least two sets include:
a measurement resource set used to represent a measurement resource that is configured by the processing module for the user equipment; and/or,
a measurement reporting set used to represent information that is configured by the processing module for the user equipment and that is related to reporting of a measurement result.

With reference to the sixth possible implementation manner of the first aspect, in a seventh possible implementation manner, if the at least two sets include the measurement resource set, that the processing module instructs the user equipment to perform measurement by using an enhanced measurement manner includes:
sending, to the user equipment, the configured measurement resource set and a measurement resource included in each measurement resource set; or,
indicating, by using physical downlink control channel PDCCH or MAC signaling, a measurement resource set corresponding to a measurement resource configured by the processing module for the user equipment; or
when a measurement resource is scheduled by using PDCCH or MAC signaling, indicating a measurement resource set corresponding to the scheduled measurement resource.

With reference to the sixth possible implementation manner of the first aspect, in an eighth possible implementation manner, if the at least two sets include the measurement reporting set, that the processing module instructs the user equipment to perform measurement by using an enhanced measurement manner includes:
when a measurement resource is scheduled by using PDCCH or MAC signaling, indicating a measurement reporting set corresponding to a measurement result of the scheduled measurement resource; or,
indicating, by using PDCCH or MAC signaling, a measurement reporting set corresponding to a measurement result of a measurement resource that is configured by the processing module for the user equipment.

With reference to the sixth possible implementation manner of the first aspect, in a ninth possible implementation manner, if the at least two sets include the measurement resource set and the measurement reporting set, that the processing module instructs the user equipment to perform measurement by using an enhanced measurement manner includes:
sending a correspondence between the configured measurement resource set and the configured measurement reporting set to the user equipment, and indicating, by using PDCCH or MAC signaling, a measurement resource set corresponding to a measurement resource configured by the processing module for the user equipment; or,
sending a correspondence between the configured measurement resource set and the configured measurement reporting set to the user equipment, and when a measurement resource is scheduled by using PDCCH or MAC signaling, indicating a measurement resource set corresponding to the scheduled measurement resource; or,
indicating, by using PDCCH or MAC signaling, a measurement resource set corresponding to a measurement resource configured by the processing module for the user equipment and a correspondence between the configured measurement resource set and the configured measurement reporting set; or,
when a measurement resource is scheduled by using PDCCH or MAC signaling, indicating a measurement resource set corresponding to the scheduled measurement resource and a correspondence between the configured measurement resource set and the configured measurement reporting set.

With reference to the first aspect, or any one manner of the first to the ninth possible implementation manners of the first aspect, in a tenth possible implementation manner, that the processing module instructs the user equipment to perform measurement by using an enhanced measurement manner includes:
for an unlicensed spectrum, instructing the user equipment to perform measurement by using the enhanced measurement manner.

With reference to the first aspect, or any one manner of the first to the tenth possible implementation manners of the first aspect, in an eleventh possible implementation manner, the measurement resource includes: at least one of a cell-specific reference signal CRS, a cell discovery reference signal DRS, a primary synchronization signal PSS, a secondary synchronization signal SSS, a channel state information-reference signal CSI-RS, or channel reference information-interference measurement CSI-IM.

According to a second aspect, user equipment is provided, where the user equipment includes:
a measurement module, configured to perform, according to an instruction of a network device, measurement by using an enhanced measurement manner; and
a reporting module, configured to report a measurement result to the network device, where
the enhanced measurement manner is to perform measurement on a pre-specified measurement resource, or to perform measurement on measurement resources corresponding to at least two sets that are configured by the network device for the user equipment.

With reference to the second aspect, in a first possible implementation manner, the measurement module is configured to:
after receiving measurement information configured by the network device for the user equipment, if the measurement information carries instruction information used to instruct the user equipment to perform measurement on a pre-specified measurement resource, perform measurement on the pre-specified measurement resource.

With reference to the first possible implementation manner of the second aspect, in a second possible implementation manner, at least one subframe in which the pre-specified measurement resource is located is:
all subframes within a specified measurement period; or,
some consecutive subframes within a specified measurement period; or,
an even-numbered subframe within a specified measurement period; or,
an odd-numbered subframe within a specified measurement period; or,
subframes separated by a specified interval within a specified measurement period; or,
a specified subframe within each sub-period within a specified measurement period, where the measurement period is divided into at least two sub-periods according to a specified time interval.

With reference to the second aspect, in a third possible implementation manner, values of interference to a serving cell from a neighboring cell on measurement resources corresponding to different sets of the at least two sets belong to different interference ranges.

With reference to the second aspect, or any one manner of the first to the third possible implementation manners of the second aspect, in a fourth possible implementation manner, the at least two sets include:
a measurement resource set used to represent a measurement resource that is configured by the network device for the user equipment; and/or,
a measurement reporting set used to represent information that is configured by the network device for the user equipment and that is related to reporting of a measurement result.

With reference to the fourth possible implementation manner of the second aspect, in a fifth possible implementation manner, if the at least two sets include the measurement resource set, the measurement module is configured to:
after receiving the measurement resource set that is sent by the network device and that is configured by the network device and a measurement resource included in each measurement resource set, separately perform measurement on the measurement resource corresponding to each measurement resource set; or,
after receiving, by using physical downlink control channel PDCCH or MAC signaling, a measurement resource set that is indicated by the network device and that corresponds to a measurement resource configured by the network device for the user equipment, separately perform measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource, separately perform measurement on the measurement resource corresponding to each measurement resource set.

With reference to the fourth possible implementation manner of the second aspect, in a sixth possible implementation manner, if the at least two sets include the measurement reporting set, the measurement module is configured to:
after receiving, by using PDCCH or MAC signaling, a measurement reporting set that is indicated by the network device when the network device schedules a measurement resource and that corresponds to a measurement result of the scheduled measurement resource, separately perform measurement on the measurement resource corresponding to each measurement reporting set; or,
after receiving, by using PDCCH or MAC signaling, a measurement reporting set that is indicated by the network device and that corresponds to a measurement result of a measurement resource configured by the network device for the user equipment, separately perform measurement on the measurement resource corresponding to each measurement reporting set.

With reference to the sixth possible implementation manner of the second aspect, in a seventh possible implementation manner, the reporting module is configured to:
according to each measurement reporting set, separately report, to the network device, the measurement result of the measurement resource corresponding to each measurement reporting set.

With reference to the fourth possible implementation manner of the second aspect, in an eighth possible implementation manner, if the at least two sets include the measurement resource set and the measurement reporting set, the measurement module is configured to:
after receiving a correspondence that is sent by the network device and that is between the measurement resource set configured by the network device and the measurement reporting set configured by the network device, and receiving, by using PDCCH or MAC signaling, a measurement resource set that is indicated by the network device and that corresponds to a measurement resource configured by the network device for the user equipment, separately perform measurement on the measurement resource corresponding to each measurement resource set; or,
after receiving a correspondence that is sent by the network device and that is between the measurement resource set configured by the network device and the measurement reporting set configured by the network device, and receiving, by using PDCCH or MAC signaling, a measurement resource set that is indicated by the network device when the network device schedules a measurement resource and that corresponds to the scheduled measurement resource, separately perform measurement on the measurement resource corresponding to each measurement resource set; or,
after receiving, by using PDCCH or MAC signaling, a measurement resource set corresponding to a measurement resource configured by the network device for the user equipment and a correspondence between the measurement resource set configured by the network device and the measurement reporting set configured by the network device, separately perform measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource and a correspondence between the measurement resource set configured by the network device and the measurement reporting set configured by the network device, separately perform measurement on the measurement resource corresponding to each measurement resource set.

With reference to the eighth possible implementation manner of the second aspect, in a ninth possible implementation manner, the reporting module is configured to:
determine, according to a correspondence between the measurement resource set configured by the network device and the measurement reporting set configured by the network device, a measurement reporting set corresponding to each measurement resource set; and separately report, to the network device according to the measurement reporting set corresponding to each measurement resource set, a measurement result of the measurement resource corresponding to each measurement resource set.

With reference to the second aspect, or any one manner of the first to the ninth possible implementation manners of the second aspect, in a tenth possible implementation manner, the measurement module is configured to: perform, according to the instruction of the network device, measurement on an unlicensed spectrum by using an enhanced measurement manner.

With reference to the second aspect, or any one manner of the first to the tenth possible implementation manners of the second aspect, in an eleventh possible implementation manner, the measurement resource includes: at least one of a cell-specific reference signal CRS, a cell discovery reference signal DRS, a primary synchronization signal PSS, a secondary synchronization signal SSS, a channel state information-reference signal CSI-RS, or channel reference information-interference measurement CSI-IM.

According to a third aspect, a network device is provided, where the network device includes:
a processor, configured to instruct user equipment to perform measurement by using an enhanced measurement manner; and
a transceiver, configured to receive a measurement result reported by the user equipment, where
the enhanced measurement manner is to perform measurement on a pre-specified measurement resource, or to perform measurement on measurement resources corresponding to at least two sets that are configured by the processor for the user equipment.

With reference to the third aspect, in a first possible implementation manner, values of interference to a serving cell from a neighboring cell on measurement resources corresponding to different sets of the at least two sets belong to different interference ranges.

With reference to the third aspect, or the first possible implementation manner of the third aspect, in a second possible implementation manner, that the processor configures at least two sets for the user equipment includes:
configuring at least two sets for serving cells on a same frequency of the user equipment; or,
configuring at least two sets for all serving cells on different frequencies of the user equipment; or,
configuring at least two sets for each serving cell on different frequencies of the user equipment.

With reference to the third aspect, the first possible implementation manner of the third aspect, or the second possible implementation manner of the third aspect, in a third possible implementation manner, that the processor configures at least two sets for the user equipment includes:
configuring at least two sets for neighboring cells on a same frequency of the user equipment; or,
configuring at least two sets for all neighboring cells on different frequencies of the user equipment; or,
configuring at least two sets for each neighboring cell on different frequencies of the user equipment.

With reference to the third aspect, or any one manner of the first to the third possible implementation manners of the third aspect, in a fourth possible implementation manner, the at least two sets include:
a measurement resource set used to represent a measurement resource that is configured by the processor for the user equipment; and/or,
a measurement reporting set used to represent information that is configured by the processor for the user equipment and that is related to reporting of a measurement result.

With reference to the fourth possible implementation manner of the third aspect, in a fifth possible implementation manner, if the at least two sets include the measurement resource set, that the processor instructs the user equipment to perform measurement by using an enhanced measurement manner includes:
sending, by using the transceiver to the user equipment, the configured measurement resource set and a measurement resource included in each measurement resource set; or,
indicating, by using physical downlink control channel PDCCH or MAC signaling, a measurement resource set corresponding to a measurement resource configured by the processor for the user equipment; or
when the transceiver schedules a measurement resource by using PDCCH or MAC signaling, indicating a measurement resource set corresponding to the scheduled measurement resource.

With reference to the fourth possible implementation manner of the third aspect, in a sixth possible implementation manner, if the at least two sets include the measurement reporting set, that the processor instructs the user equipment to perform measurement by using an enhanced measurement manner includes:
when a measurement resource is scheduled by using PDCCH or MAC signaling, indicating a measurement reporting set corresponding to a measurement result of the scheduled measurement resource; or,
indicating, by using PDCCH or MAC signaling, a measurement reporting set corresponding to a measurement result of a measurement resource that is configured by the processor for the user equipment.

With reference to the fourth possible implementation manner of the third aspect, in a seventh possible implementation manner, if the at least two sets include the measurement resource set and the measurement reporting set, that the processor instructs the user equipment to perform measurement by using an enhanced measurement manner includes:
sending, by using the transceiver, a correspondence between the configured measurement resource set and the configured measurement reporting set to the user equipment, and indicating, by using PDCCH or MAC signaling, a measurement resource set corresponding to a measurement resource configured by the processor for the user equipment; or,
sending, by using the transceiver, a correspondence between the configured measurement resource set and the configured measurement reporting set to the user equipment, and when a measurement resource is scheduled by using PDCCH or MAC signaling, indicating a measurement resource set corresponding to the scheduled measurement resource; or,
indicating, by using PDCCH or MAC signaling, a measurement resource set corresponding to a measurement resource configured by the processor for the user equipment and a correspondence between the configured measurement resource set and the configured measurement reporting set; or,
when a measurement resource is scheduled by using PDCCH or MAC signaling, indicating a measurement resource set corresponding to the scheduled measurement resource and a correspondence between the configured measurement resource set and the configured measurement reporting set.

According to a fourth aspect, user equipment is provided, where the user equipment includes:
a processor, configured to perform, according to an instruction of a network device, measurement by using an enhanced measurement manner; and
a transceiver, configured to report a measurement result to the network device, where
the enhanced measurement manner is to perform measurement on a pre-specified measurement resource, or to perform measurement on measurement resources corresponding to at least two sets that are configured by the network device for the user equipment.

With reference to the fourth aspect, in a first possible implementation manner, values of interference to a serving cell from a neighboring cell on measurement resources corresponding to different sets of the at least two sets belong to different interference ranges.

With reference to the fourth aspect, or the first possible implementation manner of the fourth aspect, in a second possible implementation manner, the at least two sets include:
a measurement resource set used to represent a measurement resource that is configured by the network device for the user equipment; and/or,
a measurement reporting set used to represent information that is configured by the network device for the user equipment and that is related to reporting of a measurement result.

With reference to the second possible implementation manner of the fourth aspect, in a third possible implementation manner, that the processor performs, according to the instruction of the network device, measurement by using an enhanced measurement manner includes:
after the transceiver receives the measurement resource set that is sent by the network device and that is configured by the network device and a measurement resource included in each measurement resource set, separately performing measurement on the measurement resource corresponding to each measurement resource set; or,
after the transceiver receives, by using physical downlink control channel PDCCH or MAC signaling, a measurement resource set that is indicated by the network device and that corresponds to a measurement resource configured by the network device for the user equipment, separately performing measurement on the measurement resource corresponding to each measurement resource set; or,
after the transceiver receives, by using PDCCH or MAC signaling, a measurement resource set that is indicated by the network device when the network device schedules a measurement resource and that corresponds to the scheduled measurement resource, separately performing measurement on the measurement resource corresponding to each measurement resource set.

With reference to the second possible implementation manner of the fourth aspect, in a fourth possible implementation manner, that the processor performs, according to the instruction of the network device, measurement by using an enhanced measurement manner includes:
after the transceiver receives, by using PDCCH or MAC signaling, a measurement reporting set that is indicated by the network device when the network device schedules a measurement resource and that corresponds to a measurement result of the scheduled measurement resource, separately performing measurement on the measurement resource corresponding to each measurement reporting set; or,
after the transceiver receives, by using PDCCH or MAC signaling, a measurement reporting set that is indicated by the network device and that corresponds to a measurement result of a measurement resource configured by the network device for the user equipment, separately performing measurement on the measurement resource corresponding to each measurement reporting set.

With reference to the fourth possible implementation manner of the fourth aspect, in a fifth possible implementation manner, the processor is further configured to:
separately report, by using the transceiver to the network device according to each measurement reporting set, the measurement result of the measurement resource corresponding to each measurement reporting set.

With reference to the second possible implementation manner of the fourth aspect, in a sixth possible implementation manner, that the processor determines, according to the instruction of the network device, to perform measurement by using an enhanced measurement manner includes:
after the transceiver receives a correspondence that is sent by the network device and that is between the measurement resource set configured by the network device and the measurement reporting set configured by the network device, and receives, by using PDCCH or MAC signaling, a measurement resource set that is indicated by the network device and that corresponds to a measurement resource configured by the network device for the user equipment, separately performing measurement on the measurement resource corresponding to each measurement resource set; or,
after the transceiver receives a correspondence that is sent by the network device and that is between the measurement resource set configured by the network device and the measurement reporting set configured by the network device, and receives, by using PDCCH or MAC signaling, a measurement resource set that is indicated by the network device when the network device schedules a measurement resource and that corresponds to the scheduled measurement resource, separately performing measurement on the measurement resource corresponding to each measurement resource set; or,
after the transceiver receives, by using PDCCH or MAC signaling, a measurement resource set corresponding to a measurement resource configured by the network device for the user equipment and a correspondence between the measurement resource set configured by the network device and the measurement reporting set configured by the network device, separately performing measurement on the measurement resource corresponding to each measurement resource set; or,
after the transceiver receives, by using PDCCH or MAC signaling, a measurement resource set that is indicated by the network device when the network device schedules a measurement resource and that corresponds to the scheduled measurement resource and a correspondence between the measurement resource set configured by the network device and the measurement reporting set configured by the network device, separately performing measurement on the measurement resource corresponding to each measurement resource set.

With reference to the sixth possible implementation manner of the fourth aspect, in a seventh possible implementation manner, the processor is further configured to:
determine, according to a correspondence between the measurement resource set configured by the network device and the measurement reporting set configured by the network device, a measurement reporting set corresponding to each measurement resource set; and separately report, by using the transceiver to the network device according to the measurement reporting set corresponding to each measurement resource set, a measurement result of the measurement resource corresponding to each measurement resource set.

According to a fifth aspect, a measurement method is provided, where the method includes:
instructing, by a network device, user equipment to perform measurement by using an enhanced measurement manner; and
receiving, by the network device, a measurement result reported by the user equipment, where
the enhanced measurement manner is to perform measurement on a pre-specified measurement resource, or to perform measurement on measurement resources corresponding to at least two sets that are configured by the network device for the user equipment.

With reference to the fifth aspect, in a first possible implementation manner, values of interference to a serving cell from a neighboring cell on measurement resources corresponding to different sets of the at least two sets belong to different interference ranges.

With reference to the fifth aspect, or the first possible implementation manner of the fifth aspect, in a second possible implementation manner, configuring, by the network device, the at least two sets for the user equipment includes:
configuring, by the network device, at least two sets for serving cells on a same frequency of the user equipment; or,
configuring, by the network device, at least two sets for all serving cells on different frequencies of the user equipment; or,
configuring, by the network device, at least two sets for each serving cell on different frequencies of the user equipment.

With reference to the fifth aspect, the first possible implementation manner of the fifth aspect, or the second possible implementation manner of the fifth aspect, in a third possible implementation manner, the configuring, by the network device, the at least two sets for the user equipment includes:
configuring, by the network device, at least two sets for neighboring cells on a same frequency of the user equipment; or,
configuring, by the network device, at least two sets for all neighboring cells on different frequencies of the user equipment; or,
configuring, by the network device, at least two sets for each neighboring cell on different frequencies of the user equipment.

With reference to the fifth aspect, or any one manner of the first to the third possible implementation manners of the fifth aspect, in a fourth possible implementation manner, the at least two sets include:
a measurement resource set used to represent a measurement resource that is configured by the network device for the user equipment; and/or,
a measurement reporting set used to represent information that is configured by the network device for the user equipment and that is related to reporting of a measurement result.

With reference to the fourth possible implementation manner of the fifth aspect, in a fifth possible implementation manner, if the at least two sets include the measurement resource set, the instructing, by a network device, user equipment to perform measurement by using an enhanced measurement manner includes:
sending, by the network device to the user equipment, the configured measurement resource set and a measurement resource included in each measurement resource set; or,
indicating, by the network device by using physical downlink control channel PDCCH or MAC signaling, a measurement resource set corresponding to a measurement resource configured by the network device for the user equipment; or
when a measurement resource is scheduled by using PDCCH or MAC signaling, indicating, by the network device, a measurement resource set corresponding to the scheduled measurement resource.

With reference to the fourth possible implementation manner of the fifth aspect, in a sixth possible implementation manner, if the at least two sets include the measurement reporting set, the instructing, by a network device, user equipment to perform measurement by using an enhanced measurement manner includes:
when a measurement resource is scheduled by using PDCCH or MAC signaling, indicating, by the network device, a measurement reporting set corresponding to a measurement result of the scheduled measurement resource; or,
indicating, by the network device by using PDCCH or MAC signaling, a measurement reporting set corresponding to a measurement result of a measurement resource that is configured by the network device for the user equipment.

With reference to the fourth possible implementation manner of the fifth aspect, in a seventh possible implementation manner, if the at least two sets include the measurement resource set and the measurement reporting set, the instructing, by a network device, user equipment to perform measurement by using an enhanced measurement manner includes:
sending, by the network device, a correspondence between the configured measurement resource set and the configured measurement reporting set to the user equipment, and indicating, by using PDCCH or MAC signaling, a measurement resource set corresponding to a measurement resource configured by the network device for the user equipment; or,
sending, by the network device, a correspondence between the configured measurement resource set and the configured measurement reporting set to the user equipment, and when a measurement resource is scheduled by using PDCCH or MAC signaling, indicating a measurement resource set corresponding to the scheduled measurement resource; or,
indicating, by the network device by using PDCCH or MAC signaling, a measurement resource set corresponding to a measurement resource configured by the network device for the user equipment and a correspondence between the configured measurement resource set and the configured measurement reporting set; or,
when a measurement resource is scheduled by using PDCCH or MAC signaling, indicating, by the network device, a measurement resource set corresponding to the scheduled measurement resource and a correspondence between the configured measurement resource set and the configured measurement reporting set.

According to a sixth aspect, a measurement method is provided, where the method includes:
performing, by user equipment according to an instruction of a network device, measurement by using an enhanced measurement manner; and
reporting, by the user equipment, a measurement result to the network device, where
the enhanced measurement manner is to perform measurement on a pre-specified measurement resource, or to perform measurement on measurement resources corresponding to at least two sets that are configured by the network device for the user equipment.

With reference to the sixth aspect, in a first possible implementation manner, values of interference to a serving cell from a neighboring cell on measurement resources corresponding to different sets of the at least two sets belong to different interference ranges.

With reference to the sixth aspect, or the first possible implementation manner of the sixth aspect, in a second possible implementation manner, the at least two sets include:
a measurement resource set used to represent a measurement resource that is configured by the network device for the user equipment; and/or,
a measurement reporting set used to represent information that is configured by the network device for the user equipment and that is related to reporting of a measurement result.

With reference to the second possible implementation manner of the sixth aspect, in a third possible implementation manner, the performing, by user equipment according to an instruction of a network device, measurement by using an enhanced measurement manner includes:
after receiving the measurement resource set that is sent by the network device and that is configured by the network device and a measurement resource included in each measurement resource set, separately performing, by the user equipment, measurement on the measurement resource corresponding to each measurement resource set; or,
after receiving, by using physical downlink control channel PDCCH or MAC signaling, a measurement resource set that is indicated by the network device and that corresponds to a measurement resource configured by the network device for the user equipment, separately performing, by the user equipment, measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource, separately performing, by the user equipment, measurement on the measurement resource corresponding to each measurement resource set.

With reference to the second possible implementation manner of the sixth aspect, in a fourth possible implementation manner, the performing, by user equipment according to an instruction of a network device, measurement by using an enhanced measurement manner includes:
after receiving, by using PDCCH or MAC signaling, a measurement reporting set that is indicated by the network device when the network device schedules a measurement resource and that corresponds to a measurement result of the scheduled measurement resource, separately performing, by the user equipment measurement on the measurement resource corresponding to each measurement reporting set; or,
after receiving, by using PDCCH or MAC signaling, a measurement reporting set that is indicated by the network device and that corresponds to a measurement result of a measurement resource configured by the network device for the user equipment, separately performing, by the user equipment, measurement on the measurement resource corresponding to each measurement reporting set.

With reference to the fourth possible implementation manner of the sixth aspect, in a fifth possible implementation manner, the reporting, by the user equipment, a measurement result to the network device includes:
separately reporting, by the user equipment to the network device according to each measurement reporting set, the measurement result of the measurement resource corresponding to each measurement reporting set.

With reference to the second possible implementation manner of the sixth aspect, in a sixth possible implementation manner, the performing, by user equipment according to an instruction of a network device, measurement by using an enhanced measurement manner includes:
after receiving a correspondence that is sent by the network device and that is between the measurement resource set configured by the network device and the measurement reporting set configured by the network device, and receiving, by using PDCCH or MAC signaling, a measurement resource set that is indicated by the network device and that corresponds to a measurement resource configured by the network device for the user equipment, separately performing, by the user equipment, measurement on the measurement resource corresponding to each measurement resource set; or,
after receiving a correspondence that is sent by the network device and that is between the measurement resource set configured by the network device and the measurement reporting set configured by the network device, and receiving, by using PDCCH or MAC signaling, a measurement resource set that is indicated by the network device when the network device schedules a measurement resource and that corresponds to the scheduled measurement resource, separately performing, by the user equipment, measurement on the measurement resource corresponding to each measurement resource set; or,
after receiving, by using PDCCH or MAC signaling, a measurement resource set corresponding to a measurement resource configured by the network device for the user equipment and a correspondence between the measurement resource set configured by the network device and the measurement reporting set configured by the network device, separately performing, by the user equipment, measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource and a correspondence between the measurement resource set configured by the network device and the measurement reporting set configured by the network device, separately performing, by the user equipment, measurement on the measurement resource corresponding to each measurement resource set.

With reference to the sixth possible implementation manner of the sixth aspect, in a seventh possible implementation manner, the reporting, by the user equipment, a measurement result to the network device includes:
determining, by the user equipment according to a correspondence between the measurement resource set configured by the network device and the measurement reporting set configured by the network device, a measurement reporting set corresponding to each measurement resource set; and
separately reporting, by the user equipment to the network device according to the measurement reporting set corresponding to each measurement resource set, a measurement result of the measurement resource corresponding to each measurement resource set.

In the method and the device provided in the present invention, a network device instructs user equipment to perform measurement by using an enhanced measurement manner, to enable the user equipment to perform measurement on a pre-specified measurement resource or perform measurement on measurement resources corresponding to at least two sets that are configured by the network device for the user equipment, and receives a measurement result reported by the user equipment. Because an enhanced measurement manner is used, accuracy of measurement and reliability of a measurement result are improved.

### BRIEF DESCRIPTION OF DRAWINGS

FIG. 1 is a schematic diagram of UE in an LTE system performing RRM measurement;
FIG. 2 is a schematic diagram of a network device according to an embodiment of the present invention;
FIG. 3 is a schematic diagram of user equipment according to an embodiment of the present invention;
FIG. 4 is a schematic diagram of another network device according to an embodiment of the present invention;
FIG. 5 is a schematic diagram of another user equipment according to an embodiment of the present invention;
FIG. 6 is a schematic diagram of a measurement method on a side of a network device according to an embodiment of the present invention; and
FIG. 7 is a schematic diagram of a measurement method on a side of user equipment according to an embodiment of the present invention.

### DESCRIPTION OF EMBODIMENTS

In embodiments of the present invention, a network device instructs user equipment to perform measurement by using an enhanced measurement manner, to enable the user equipment to perform measurement on a pre-specified measurement resource or perform measurement on measurement resources corresponding to at least two sets that are configured by the network device for the user equipment, thereby improving accuracy of measurement and reliability of a measurement result.

The embodiments of the present invention are applicable to a Long Term Evolution (Long Term Evolution, LTE) system, a Universal Mobile Telecommunications System Terrestrial Radio Access Network (UMTS Terrestrial Radio Access Network, UTRAN; Universal Mobile Telecommunications System, UMTS) system, and a WIFI system.

The network device involved in the embodiments of the present invention may be a base station (for example, an access point (Access Point, AP)). For example, the base station may be a base station (BTS, Base Transceiver Station) in GSM or the CDMA, may also be a base station (NodeB) in WCDMA, and may further be an evolved NodeB (NodeB, eNB, or e-NodeB, evolutional Node B) in the LTE, which is not limited in this application.

The user equipment involved in the embodiments of the present invention may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks over a radio access network (for example, RAN, Radio Access Network). The wireless terminal may be a mobile terminal, for example, a mobile phone (or referred to as a "cellular" phone) and a computer equipped with a mobile terminal.

The following further describes the embodiments of the present invention in detail with reference to this specification. It should be understood that the specific embodiments described herein are merely used to explain the present invention but are not intended to limit the present invention.

An embodiment of the present invention provides a network device. As shown in FIG. 2, the network device includes a processing module 21 and a receiving module 22.

The processing module 21 is configured to instruct user equipment to perform measurement by using an enhanced measurement manner, where the enhanced measurement manner is to perform measurement on a pre-specified measurement resource, or to perform measurement on measurement resources corresponding to at least two sets that are configured by the processing module 21 for the user equipment.

The receiving module 22 is configured to receive a measurement result reported by the user equipment.

In this embodiment of the present invention, a network device instructs user equipment to perform measurement by using an enhanced measurement manner, to enable the user equipment to perform measurement on a pre-specified measurement resource or perform measurement on measurement resources corresponding to at least two sets that are configured by the network device for the user equipment, and receives a measurement result reported by the user equipment. Because an enhanced measurement manner is used, accuracy of measurement and reliability of a measurement result are improved.

It should be noted that in this embodiment of the present invention, measurement that the processing module 21 instructs the user equipment to perform includes RRM measurement and channel state information (Channel State Information, CSI) measurement. The RRM measurement includes reference signal received power (Reference Signal Received Power, RSRP) measurement and reference signal received quality (Reference Signal Received Quality, RSRQ). The CSI measurement includes measurement on a channel state information-reference signal (Channel State Information-Reference Signals, CSI-RS) resource and measurement on a channel reference information-interference measurement (Channel State Information-Interference Measurement, CSI-IM) resource. This embodiment of the present invention is not limited to the foregoing two types of measurement, and may also be applicable to other measurement. Because a used technical solution is similar, details are no longer described herein.

For the CSI measurement, currently, in coordinated multipoint transmission/reception (Coordinated Multiple Points Transmission/Reception, CoMP), the CSI-RS and the CSI-IM are configured by using radio resource control (Radio Resource Control, RRC) signaling. On the basis of the foregoing configuration, in enhanced interference management and traffic adaptation (enhanced Interference Management and Traffic Adaptation, eIMTA), two subframe sets are further configured or/and two subframe sets are configured in combination with inter-cell interference coordination (Inter-Cell Interference Coordinate, ICIC). In CoMP, whether another AP that performs coordinated transmission with a current access point AP sends a signal is controllable, but in an LTE-U system, due to a possible failure to obtain a resource through contention, whether another AP sends a signal is uncontrollable, a resource combination of CSI-IM and a CSI-RS in subframe sets cannot be pre-configured. Therefore, in this embodiment of the present invention, a set to which a resource combination of CSI-IM and a CSI-RS belongs is indicated by using physical downlink control channel (Physical Downlink Control Channel, PDCCH) or media access control (Media Access Control, MAC) signaling.

LTE-U refers to an LTE system in which an unlicensed spectrum is used. When a base station in the LTE-U uses an unlicensed spectrum, it is required that base station and another communications device (for example, a WiFi device) share the spectrum resource.

The measurement resource in this embodiment of the present invention includes a cell-specific reference signal (Cell-specific Reference Signals, CRS) resource, a cell discovery reference signal (Discovery Reference Signals, DRS) resource, a primary synchronization signal (Primary Synchronization Signal, PSS), a secondary synchronization signal (Secondary Synchronization Signal, SSS), a CSI-RS resource, or a CSI-IM resource.

In a first preferred implementation manner, the enhanced measurement manner is to perform measurement on a pre-specified measurement resource. In the manner, that the processing module 21 instructs the user equipment to perform measurement by using an enhanced measurement manner includes:
carrying, in measurement information configured for the user equipment, instruction information used to instruct the user equipment to perform measurement on the pre-specified measurement resource.

Specifically, after configuring a serving cell for the user equipment, the processing module 21 configures, for the user equipment, measurement information of performing measurement on the serving cell and/or a neighboring cell. For example, the measurement information indicates a type of measurement (for example, RSRP measurement, RSRQ measurement, or CSI measurement) the user equipment is to perform, a manner of reporting a measurement result (for example, periodic reporting or event trigger reporting), reporting of location information, and the like. Moreover, the configured measurement information carries instruction information used to instruct the user equipment to perform measurement on a pre-specified measurement resource, to enable the user equipment to acquire instruction information of requiring to perform measurement on the pre-specified measurement resource.

In the manner, at least one subframe in which the pre-specified measurement resource is located is:
all subframes within a specified measurement period; or,
some consecutive subframes within a specified measurement period; or,
an even-numbered subframe within a specified measurement period; or,
an odd-numbered subframe within a specified measurement period; or,
subframes separated by a specified interval within a specified measurement period; or,
a specified subframe within each sub-period within a specified measurement period, where the measurement period is divided into at least two sub-periods according to a specified time interval.

The specified measurement period may be a discontinuous reception (Discontinuous Reception, DRX) period, or a measurement reporting period.

In the manner, a measurement resource on which the user equipment is required to perform measurement is pre-specified, so that the user equipment performs measurement on the pre-specified measurement resource, and reports a measurement result to the network device. Pre-specified measurement resources are distributed relatively evenly, thereby improving accuracy of a measurement result. In addition, because measurement resources are pre-specified, the network device no longer needs to notify the user equipment of information of these measurement resources by using signaling messages, thereby saving signaling overheads.

In a second preferred implementation manner, the enhanced measurement manner is to perform measurement on measurement resources corresponding to at least two sets that are configured by the processing module 21 for the user equipment. In the manner, values of interference to a serving cell from a neighboring cell on measurement resources corresponding to different sets of the at least two sets belong to different interference ranges.

Specifically, when configuring the at least two sets, the processing module 21 performs configuration according to values of interference to a serving cell from a neighboring cell on measurement resources, so as to make values of interference to a serving cell from a neighboring cell on measurement resources corresponding to different sets belong to different interference ranges. For example, measurement resources having small interference values are configured in one set, and measurement resources having large interference values are configured in one set, thereby improving reliability of a measurement result.

Certainly, in addition to the foregoing configuration principle, the processing module 21 may further configure the at least two sets based on another principle. For example, the at least two sets are configured for the user equipment according to a principle of different air interface environments, so that measurement resources corresponding to different sets correspond to different air interface environments, to enable the UE to perform measurement in different air interface environments, thereby improving reliability of a measurement result of the user equipment. In this embodiment of the present invention, the principle of configuring the at least two sets is not limited.

In the manner, that the processing module 21 configures at least two sets for the user equipment includes:
configuring at least two sets for serving cells on a same frequency of the user equipment; or,
configuring at least two sets for all serving cells on different frequencies of the user equipment; or,
configuring at least two sets for each serving cell on different frequencies of the user equipment.

In the manner, based on any embodiment in the foregoing, that the processing module 21 configures at least two sets for the user equipment includes:
configuring at least two sets for neighboring cells on a same frequency of the user equipment; or,
configuring at least two sets for all neighboring cells on different frequencies of the user equipment; or,
configuring at least two sets for each neighboring cell on different frequencies of the user equipment.

In the manner, the at least two sets include:
a measurement resource set used to represent a measurement resource that is configured by the processing module 21 for the user equipment; and/or,
a measurement reporting set used to represent information that is configured by the processing module 21 for the user equipment and that is related to reporting of a measurement result.

The information that is related to reporting of a measurement result includes information such as a measurement type, a reporting location, and a reporting manner.

During implementation, if the at least two sets include the measurement resource set, that the processing module 21 instructs the user equipment to perform measurement by using an enhanced measurement manner includes the following three preferred implementation manners:
Manner 1: The processing module 21 sends, to the user equipment, the configured measurement resource set and a measurement resource included in each measurement resource set.

In the manner, the processing module 21 configures a measurement resource set and a measurement resource for the user equipment in advance, and sends, to the user equipment in advance, the configured measurement resource set and a measurement resource included in each measurement resource set.

Manner 2: The processing module 21 indicates, by using PDCCH or MAC signaling, a measurement resource set corresponding to a measurement resource configured by the processing module 21 for the user equipment.

In the manner, the processing module 21 configures the measurement resource set for the user equipment, and then dynamically indicates, by using PDCCH or MAC signaling, a measurement resource set corresponding to a measurement resource configured by the processing module 21 for the user equipment, thereby implementing dynamic configuration of a measurement resource in the measurement resource set, so that the configured measurement resource can accurately reflect a time at which an adjacent-cell reference signal is sent, thereby improving accuracy of measurement by the user equipment and reliability of a measurement result.

In the manner, the processing module 21 may notify, based on a result of resource contention of the adjacent-cell reference signal and by using PDCCH or MAC signaling, the user equipment of a measurement resource set corresponding to scheduled measurement resource, thereby improving accuracy of measurement of the user equipment and reliability of a measurement result.

In the manner, the processing module 21 may send information (for example, identifier information) of the configured measurement resource set to the user equipment in advance. In this case, a measurement resource corresponding to each measurement resource set is unknown. That is, the processing module 21 first sends the information of the configured measurement resource set to the user equipment, and then indicates, by using PDCCH or MAC signaling, a measurement resource set corresponding to a measurement resource configured by the processing module 21 for the user equipment.

Manner 3: When a measurement resource is scheduled by using PDCCH or MAC signaling, the processing module 21 indicates a measurement resource set corresponding to the scheduled measurement resource.

In the manner, the processing module 21 configures a measurement resource set for the user equipment in advance. In this case, a measurement resource corresponding to each measurement resource set is unknown. When a measurement resource is scheduled (a measurement resource may be scheduled for a cell, or a measurement resource may be scheduled for user equipment), the processing module 21 then dynamically indicates, by using PDCCH or MAC signaling, a measurement resource set corresponding to the scheduled measurement resource, thereby implementing dynamic configuration of a measurement resource in the measurement resource set, and improving accuracy of measurement of the user equipment and reliability of a measurement result.

In the manner, the processing module 21 may send information (for example, identifier information) of the configured measurement resource set to the user equipment in advance. In this case, a measurement resource corresponding to each measurement resource set is unknown. That is, the processing module 21 first sends the information of the configured measurement resource set to the user equipment, and when a measurement resource is scheduled by using PDCCH or MAC signaling, then indicates a measurement resource set corresponding to the scheduled measurement resource.

During implementation, if the at least two sets include the measurement reporting set, that the processing module 21 instructs the user equipment to perform measurement by using an enhanced measurement manner includes the following two preferred implementation manners:
Manner 1: When a measurement resource is scheduled by using PDCCH or MAC signaling, the processing module 21 indicates a measurement reporting set corresponding to a measurement result of the scheduled measurement resource.

In the manner, the processing module 21 configures a measurement reporting set for the user equipment in advance. In this case, a measurement resource corresponding to each measurement reporting set is unknown. When a measurement resource is scheduled (a measurement resource may be scheduled for a cell, or a measurement resource may be scheduled for the user equipment) by using PDCCH or MAC signaling, the processing module 21 then indicates a measurement reporting set corresponding to a measurement result of the scheduled measurement resource, thereby implementing dynamic configuration of a measurement resource corresponding to the measurement reporting set, so that the configured measurement resource can accurately reflect a time at which an adjacent-cell reference signal is sent, thereby improving accuracy of measurement of the user equipment and reliability of a measurement result.

In the manner, the processing module 21 may notify, based on a result of resource contention of the adjacent-cell reference signal and by using PDCCH or MAC signaling, the user equipment of a measurement reporting set corresponding to the scheduled measurement resource, thereby improving accuracy of measurement of the user equipment and reliability of a measurement result.

In the manner, the processing module 21 may send information (for example, identifier information) of the configured measurement reporting set to the user equipment in advance. In this case, a measurement resource corresponding to each measurement reporting set is unknown. That is, the processing module 21 first sends information of the configured measurement reporting set to the user equipment, and when a measurement resource is scheduled by using PDCCH or MAC signaling, then indicates a measurement reporting set corresponding to a measurement result of the scheduled measurement resource.

Manner 2: The processing module 21 indicates, by using PDCCH or MAC signaling, a measurement reporting set corresponding to a measurement result of a measurement resource that is configured by the processing module 21 for the user equipment.

In the manner, the processing module 21 configures a measurement reporting set for the user equipment in advance. In this case, a measurement resource corresponding to each measurement reporting set is unknown. The processing module 21 then indicates, by using PDCCH or MAC signaling, a measurement reporting set corresponding to a measurement result of a measurement resource that is configured by the processing module 21 for the user equipment, thereby implementing dynamic configuration of a measurement resource corresponding to the measurement reporting set, and improving accuracy of measurement of the user equipment and reliability of a measurement result.

In the manner, the processing module 21 may send information (for example, identifier information) of the configured measurement reporting set to the user equipment in advance. In this case, a measurement resource corresponding to each measurement reporting set is unknown. That is, the processing module 21 first sends the information of the configured measurement reporting set to the user equipment, and when a measurement resource is scheduled by using PDCCH or MAC signaling, then indicates a measurement reporting set corresponding to a measurement result of the scheduled measurement resource.

During implementation, if the at least two sets include the measurement resource set and the measurement reporting set, that the processing module 21 instructs the user equipment to perform measurement by using an enhanced measurement manner includes the following four preferred manners:
Manner A: The processing module 21 sends a correspondence between the configured measurement resource set and the configured measurement reporting set to the user equipment, and indicates, by using PDCCH or MAC signaling, a measurement resource set corresponding to a measurement resource configured by the processing module 21 for the user equipment.

In the manner, the processing module 21 configures a measurement resource set and a measurement reporting set and a correspondence between the configured measurement resource set and the configured measurement reporting set in advance, and sends the correspondence between the configured measurement resource set and the configured measurement reporting set to the user equipment. In this case, a measurement resource corresponding to each measurement reporting set is unknown. The processing module 21 then dynamically indicates, by using PDCCH or MAC signaling, a measurement resource set corresponding to a measurement resource configured by the processing module 21 for the user equipment, thereby implementing dynamic configuration of a measurement resource corresponding to the measurement reporting set, and improving accuracy of measurement of the user equipment and reliability of a measurement result.

Manner B: The processing module 21 sends a correspondence between the configured measurement resource set and the configured measurement reporting set to the user equipment, and when a measurement resource is scheduled by using PDCCH or MAC signaling, indicates a measurement resource set corresponding to the scheduled measurement resource.

In the manner, the processing module 21 configures a measurement resource set and a measurement reporting set and a correspondence between the configured measurement resource set and the configured measurement reporting set in advance, and sends the correspondence between the configured measurement resource set and the configured measurement reporting set to the user equipment. In this case, a measurement resource corresponding to each measurement reporting set is unknown. When a measurement resource is scheduled by using PDCCH or MAC signaling, The processing module 21 then indicates a measurement resource set corresponding to the scheduled measurement resource, thereby implementing dynamic configuration of a measurement resource corresponding to the measurement reporting set, and improving accuracy of measurement of the user equipment and reliability of a measurement result.

Manner C: The processing module 21 indicates, by using PDCCH or MAC signaling, a measurement resource set corresponding to a measurement resource configured by the processing module 21 for the user equipment and a correspondence between the configured measurement resource set and the configured measurement reporting set.

In the manner, the processing module 21 configures a measurement resource set and a measurement reporting set and a correspondence between the configured measurement resource set and the configured measurement reporting set in advance. The processing module 21 then indicates, by using PDCCH or MAC signaling, a measurement resource set corresponding to a measurement resource configured by the processing module 21 for the user equipment and a correspondence between the configured measurement resource set and the configured measurement reporting set.

Manner D: When a measurement resource is scheduled by using PDCCH or MAC signaling, the processing module 21 indicates a measurement resource set corresponding to the scheduled measurement resource and a correspondence between the configured measurement resource set and the configured measurement reporting set.

In the manner, the processing module 21 configures a measurement resource set and a measurement reporting set and a correspondence between the configured measurement resource set and the configured measurement reporting set in advance. When a measurement resource is scheduled by using PDCCH or MAC signaling, the processing module 21 then indicates a measurement resource set corresponding to the scheduled measurement resource and a correspondence between the configured measurement resource set and the configured measurement reporting set.

In Manner A to Manner D in the foregoing, the correspondence between a measurement resource set and a measurement reporting set refers to a measurement reporting set corresponding to a measurement result of a measurement resource corresponding to a measurement resource set. That is, a measurement result of a measurement resource corresponding to a measurement resource set is reported according to a configuration of a measurement reporting set corresponding to the measurement result, so that after completing measurement of a measurement resource corresponding to each measurement resource set, the user equipment separately reports a measurement result of the measurement resource corresponding to each measurement resource set according to the measurement reporting set corresponding to the measurement resource set.

Based on any embodiment in the foregoing, that the processing module 21 instructs the user equipment to perform measurement by using an enhanced measurement manner includes:
for an unlicensed spectrum, instructing the user equipment to perform measurement by using the enhanced measurement manner, thereby resolving a problem of low accuracy of measurement results of RRM measurement and CSI measurement on the unlicensed spectrum.

Certainly, the solution in this embodiment of the present invention may also be applied to a licensed spectrum, so as to improve accuracy and reliability of a measurement result.

During implementation, in a case for an unlicensed spectrum, the processing module 21 is further configured to: configure a serving cell on an unlicensed spectrum for the user equipment.

Correspondingly, when configuring, for the UE, measurement of a cell on an unlicensed spectrum, the processing module 21 instructs the user equipment to perform measurement by using an enhanced measurement manner.

Based on a same inventive concept, an embodiment of the present invention further provides user equipment. Parts that are the same as those of the network device are no longer described herein. For details, refer to the foregoing description of the network device. As shown in FIG. 3, the user equipment includes a measurement module 31 and a reporting module 32.

The measurement module 31 is configured to perform, according to an instruction of a network device, measurement by using an enhanced measurement manner.

The reporting module 32 is configured to report a measurement result to the network device.

The enhanced measurement manner is to perform measurement on a pre-specified measurement resource, or to perform measurement on measurement resources corresponding to at least two sets that are configured by the network device for the user equipment.

In a first preferred implementation manner, the enhanced measurement manner is to perform measurement on a pre-specified measurement resource, and in the manner, the measurement module 31 is configured to:
after receiving measurement information configured by the network device for the user equipment, if the measurement information carries instruction information used to instruct the user equipment to perform measurement on a pre-specified measurement resource, perform measurement on the pre-specified measurement resource.

Specifically, at least one subframe in which the pre-specified measurement resource is located is:
all subframes within a specified measurement period; or,
some consecutive subframes within a specified measurement period; or,
an even-numbered subframe within a specified measurement period; or,
an odd-numbered subframe within a specified measurement period; or,
subframes separated by a specified interval within a specified measurement period; or,
a specified subframe within each sub-period within a specified measurement period, where the measurement period is divided into at least two sub-periods according to a specified time interval.

In a second preferred implementation manner, the enhanced measurement manner is to perform measurement on measurement resources corresponding to at least two sets that are configured by the network device for the user equipment. In the manner, values of interference to a serving cell from a neighboring cell on measurement resources corresponding to different sets of the at least two sets belong to different interference ranges.

In the manner, the at least two sets include:
a measurement resource set used to represent a measurement resource that is configured by the network device for the user equipment; and/or,
a measurement reporting set used to represent information that is configured by the network device for the user equipment and that is related to reporting of a measurement result.

During implementation, if the at least two sets include the measurement resource set, the measurement module 31 is configured to:
after receiving the measurement resource set that is sent by the network device and that is configured by the network device and a measurement resource included in each measurement resource set, separately perform measurement on the measurement resource corresponding to each measurement resource set; or,
after receiving, by using physical downlink control channel PDCCH or MAC signaling, a measurement resource set that is indicated by the network device and that corresponds to a measurement resource configured by the network device for the user equipment, separately perform measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource, separately perform measurement on the measurement resource corresponding to each measurement resource set.

During implementation, if the at least two sets include the measurement reporting set, the measurement module 31 is configured to:
after receiving, by using PDCCH or MAC signaling, a measurement reporting set that is indicated by the network device when the network device schedules a measurement resource and that corresponds to a measurement result of the scheduled measurement resource, separately perform measurement on the measurement resource corresponding to each measurement reporting set; or,
after receiving, by using PDCCH or MAC signaling, a measurement reporting set that is indicated by the network device and that corresponds to a measurement result of a measurement resource configured by the network device for the user equipment, separately perform measurement on the measurement resource corresponding to each measurement reporting set.

Correspondingly, the reporting module 32 is configured to:
separately report, to the network device according to each measurement reporting set, the measurement result of the measurement resource corresponding to each measurement reporting set.

During implementation, if the at least two sets include the measurement resource set and the measurement reporting set, the measurement module 31 is configured to:
after receiving a correspondence that is sent by the network device and that is between the measurement resource set configured by the network device and the measurement reporting set configured by the network device, and receiving, by using PDCCH or MAC signaling, a measurement resource set that is indicated by the network device and that corresponds to a measurement resource configured by the network device for the user equipment, separately perform measurement on the measurement resource corresponding to each measurement resource set; or,
after receiving a correspondence that is sent by the network device and that is between the measurement resource set configured by the network device and the measurement reporting set configured by the network device, and receiving, by using PDCCH or MAC signaling, a measurement resource set that is indicated by the network device when the network device schedules a measurement resource and that corresponds to the scheduled measurement resource, separately perform measurement on the measurement resource corresponding to each measurement resource set; or,
after receiving, by using PDCCH or MAC signaling, a measurement resource set corresponding to a measurement resource configured by the network device for the user equipment and a correspondence between the measurement resource set configured by the network device and the measurement reporting set configured by the network device, separately perform measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource and a correspondence between the measurement resource set configured by the network device and the measurement reporting set configured by the network device, separately perform measurement on the measurement resource corresponding to each measurement resource set.

Correspondingly, the reporting module 32 is configured to:
determine, according to a correspondence between the measurement resource set configured by the network device and the measurement reporting set configured by the network device, a measurement reporting set corresponding to each measurement resource set; and separately report, to the network device according to the measurement reporting set corresponding to each measurement resource set, a measurement result of the measurement resource corresponding to each measurement resource set.

Based on any embodiment in the foregoing, the measurement module 31 is configured to: perform, according to the instruction of the network device, measurement on an unlicensed spectrum by using an enhanced measurement manner.

Certainly, the solution in this embodiment of the present invention may also be applied to a licensed spectrum, so as to improve accuracy and reliability of a measurement result.

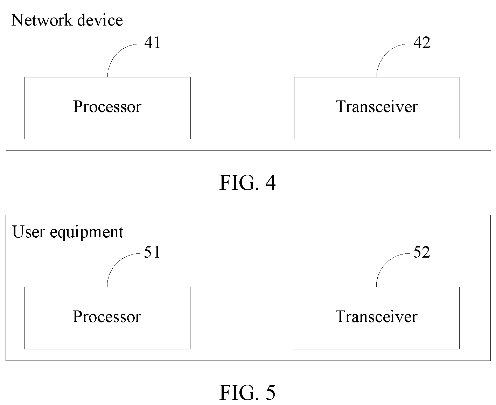

Based on a same inventive concept, an embodiment of the present invention further provides another network device. Parts that are the same as those of the network device shown in FIG. 2 are no longer described herein. For details, refer to the description of the network device shown in FIG. 2. As shown in FIG. 4, the network device includes a processor 41 and a transceiver 42.

The processor 41 is configured to instruct user equipment to perform measurement by using an enhanced measurement manner, where the enhanced measurement manner is to perform measurement on a pre-specified measurement resource, or to perform measurement on measurement resources corresponding to at least two sets that are configured by the processor 41 for the user equipment;

The transceiver 42 is configured to receive a measurement result reported by the user equipment.

In a first preferred implementation manner, if the enhanced measurement manner is to perform measurement on the pre-specified measurement resource, that the processor 41 instructs the user equipment to perform measurement by using an enhanced measurement manner includes:
carrying, in measurement information configured for the user equipment, instruction information used to instruct the user equipment to perform measurement on the pre-specified measurement resource.

In the manner, at least one subframe in which the pre-specified measurement resource is located is:
all subframes within a specified measurement period; or,
some consecutive subframes within a specified measurement period; or,
an even-numbered subframe within a specified measurement period; or,
an odd-numbered subframe within a specified measurement period; or,
subframes separated by a specified interval within a specified measurement period; or,
a specified subframe within each sub-period within a specified measurement period, where the measurement period is divided into at least two sub-periods according to a specified time interval.

In a second preferred implementation manner, the enhanced measurement manner is to perform measurement on measurement resources corresponding to at least two sets that are configured by the processor 31 for the user equipment. In the manner, values of interference to a serving cell from a neighboring cell on measurement resources corresponding to different sets of the at least two sets belong to different interference ranges.

In the manner, that the processor 31 configures at least two sets for the user equipment includes:
configuring at least two sets for serving cells on a same frequency of the user equipment; or,
configuring at least two sets for all serving cells on different frequencies of the user equipment; or,
configuring at least two sets for each serving cell on different frequencies of the user equipment.

In the manner, based on any embodiment in the foregoing, that the processor 31 configures at least two sets for the user equipment includes:
configuring at least two sets for neighboring cells on a same frequency of the user equipment; or,
configuring at least two sets for all neighboring cells on different frequencies of the user equipment; or,
configuring at least two sets for each neighboring cell on different frequencies of the user equipment.

Based on any embodiment in the foregoing, the at least two sets include:
a measurement resource set used to represent a measurement resource that is configured by the processor 31 for the user equipment; and/or,
a measurement reporting set used to represent information that is configured by the processor 31 for the user equipment and that is related to reporting of a measurement result.

During implementation, if the at least two sets include the measurement resource set, that the processor 31 instructs the user equipment to perform measurement by using an enhanced measurement manner includes:
sending, by using the transceiver 32 to the user equipment, the configured measurement resource set and a measurement resource included in each measurement resource set; or,
indicating, by using physical downlink control channel PDCCH or MAC signaling, a measurement resource set corresponding to a measurement resource configured by the processor 31 for the user equipment; or
when a measurement resource is scheduled by using PDCCH or MAC signaling, indicating a measurement resource set corresponding to the scheduled measurement resource.

During implementation, if the at least two sets include the measurement reporting set, that the processor 31 instructs the user equipment to perform measurement by using an enhanced measurement manner includes:
when a measurement resource is scheduled by using PDCCH or MAC signaling, indicating a measurement reporting set corresponding to a measurement result of the scheduled measurement resource; or,
indicating, by using PDCCH or MAC signaling, a measurement reporting set corresponding to a measurement result of a measurement resource that is configured by the processor 31 for the user equipment.

During implementation, if the at least two sets include the measurement resource set and the measurement reporting set, that the processor 31 instructs the user equipment to perform measurement by using an enhanced measurement manner includes:
sending, by using the transceiver 32, a correspondence between the configured measurement resource set and the configured measurement reporting set to the user equipment, and indicating, by using PDCCH or MAC signaling, a measurement resource set corresponding to a measurement resource configured by the processor 31 for the user equipment; or,
sending, by using the transceiver 32, a correspondence between the configured measurement resource set and the configured measurement reporting set to the user equipment, and when a measurement resource is scheduled by using PDCCH or MAC signaling, indicating a measurement resource set corresponding to the scheduled measurement resource; or,
indicating, by using PDCCH or MAC signaling, a measurement resource set corresponding to a measurement resource configured by the processor 31 for the user equipment and a correspondence between the configured measurement resource set and the configured measurement reporting set; or,
when a measurement resource is scheduled by using PDCCH or MAC signaling, indicating a measurement resource set corresponding to the scheduled measurement resource and a correspondence between the configured measurement resource set and the configured measurement reporting set.

Based on any embodiment in the foregoing, that the processor 31 instructs the user equipment to perform measurement by using an enhanced measurement manner includes:
for an unlicensed spectrum, instructing the user equipment to perform measurement by using the enhanced measurement manner.

Based on a same inventive concept, an embodiment of the present invention further provides another user equipment. Parts that are the same as those of the user equipment shown in FIG. 3 are no longer described herein. For details, refer to the description of the network device shown in FIG. 3. As shown in FIG. 5, the user equipment includes a processor 51 and a transceiver 52.

The processor 51 is configured to perform, according to an instruction of a network device, measurement by using an enhanced measurement manner.

The transceiver 52 is configured to report a measurement result to the network device.

The enhanced measurement manner is to perform measurement on a pre-specified measurement resource, or to perform measurement on measurement resources corresponding to at least two sets that are configured by the network device for the user equipment.

In a first preferred implementation manner, the enhanced measurement manner is to perform measurement on a pre-specified measurement resource, and in the manner, the processor 51 is configured to:
after the transceiver 52 receives measurement information configured by the network device for the user equipment, if the measurement information carries instruction information used to instruct the user equipment to perform measurement on a pre-specified measurement resource, perform measurement on the pre-specified measurement resource.

Specifically, at least one sub frame in which the pre-specified measurement resource is located is:
all subframes within a specified measurement period; or,
some consecutive subframes within a specified measurement period; or,
an even-numbered subframe within a specified measurement period; or,
an odd-numbered subframe within a specified measurement period; or,
subframes separated by a specified interval within a specified measurement period; or,
a specified subframe within each sub-period within a specified measurement period, where the measurement period is divided into at least two sub-periods according to a specified time interval.

In a second preferred implementation manner, the enhanced measurement manner is to perform measurement on measurement resources corresponding to at least two sets that are configured by the network device for the user equipment. In the manner, values of interference to a serving cell from a neighboring cell on measurement resources corresponding to different sets of the at least two sets belong to different interference ranges.

In the manner, the at least two sets include:
a measurement resource set used to represent a measurement resource that is configured by the network device for the user equipment; and/or,
a measurement reporting set used to represent information that is configured by the network device for the user equipment and that is related to reporting of a measurement result.

During implementation, if the at least two sets include the measurement resource set, the processor 51 is configured to:
after the transceiver 52 receives the measurement resource set that is sent by the network device and that is configured by the network device and a measurement resource included in each measurement resource set, separately perform measurement on the measurement resource corresponding to each measurement resource set; or,
after the transceiver 52 receives, by using physical downlink control channel PDCCH or MAC signaling, a measurement resource set that is indicated by the network device and that corresponds to a measurement resource configured by the network device for the user equipment, separately perform measurement on the measurement resource corresponding to each measurement resource set; or,
after the transceiver 52 receives, by using PDCCH or MAC signaling, a measurement resource set that is indicated by the network device when the network device schedules a measurement resource and that corresponds to the scheduled measurement resource, separately perform measurement on the measurement resource corresponding to each measurement resource set.

During implementation, if the at least two sets include the measurement reporting set, the processor 51 is configured to:
after the transceiver 52 receives, by using PDCCH or MAC signaling, a measurement reporting set that is indicated by the network device when the network device schedules a measurement resource and that corresponds to a measurement result of the scheduled measurement resource, separately perform measurement on the measurement resource corresponding to each measurement reporting set; or,
after the transceiver 52 receives, by using PDCCH or MAC signaling, a measurement reporting set that is indicated by the network device and that corresponds to a measurement result of a measurement resource configured by the network device for the user equipment, separately perform measurement on the measurement resource corresponding to each measurement reporting set.

Correspondingly, the processor 51 is further configured to:
separately report, by using the transceiver 52 to the network device according to each measurement reporting set, the measurement result of the measurement resource corresponding to each measurement reporting set.

During implementation, if the at least two sets include the measurement resource set and the measurement reporting set, the processor 51 is configured to:
after the transceiver 52 receives a correspondence that is sent by the network device and that is between the measurement resource set configured by the network device and the measurement reporting set configured by the network device, and the transceiver 52 receives, by using PDCCH or MAC signaling, a measurement resource set that is indicated by the network device and that corresponds to a measurement resource configured by the network device for the user equipment, separately perform measurement on the measurement resource corresponding to each measurement resource set; or,
after the transceiver 52 receives a correspondence that is sent by the network device and that is between the measurement resource set configured by the network device and the measurement reporting set configured by the network device, and the transceiver 52 receives, by using PDCCH or MAC signaling, a measurement resource set that is indicated by the network device when the network device schedules a measurement resource and that corresponds to the scheduled measurement resource, separately perform measurement on the measurement resource corresponding to each measurement resource set; or,
after the transceiver 52 receives, by using PDCCH or MAC signaling, a measurement resource set corresponding to a measurement resource configured by the network device for the user equipment and a correspondence between the measurement resource set configured by the network device and the measurement reporting set configured by the network device, separately perform measurement on the measurement resource corresponding to each measurement resource set; or,
after the transceiver 52 receives, by using PDCCH or MAC signaling, a measurement resource set that is indicated by the network device when the network device schedules a measurement resource and that corresponds to the scheduled measurement resource and a correspondence between the measurement resource set configured by the network device and the measurement reporting set configured by the network device, separately perform measurement on the measurement resource corresponding to each measurement resource set.

Correspondingly, the processor 51 is further configured to:
determine, according to a correspondence between the measurement resource set configured by the network device and the measurement reporting set configured by the network device, a measurement reporting set corresponding to each measurement resource set; and separately report, by using the transceiver 52 to the network device according to the measurement reporting set corresponding to each measurement resource set, a measurement result of the measurement resource corresponding to each measurement resource set.

Based on any embodiment in the foregoing, the processor 51 is configured to: perform, according to the instruction of the network device, measurement on an unlicensed spectrum by using an enhanced measurement manner.

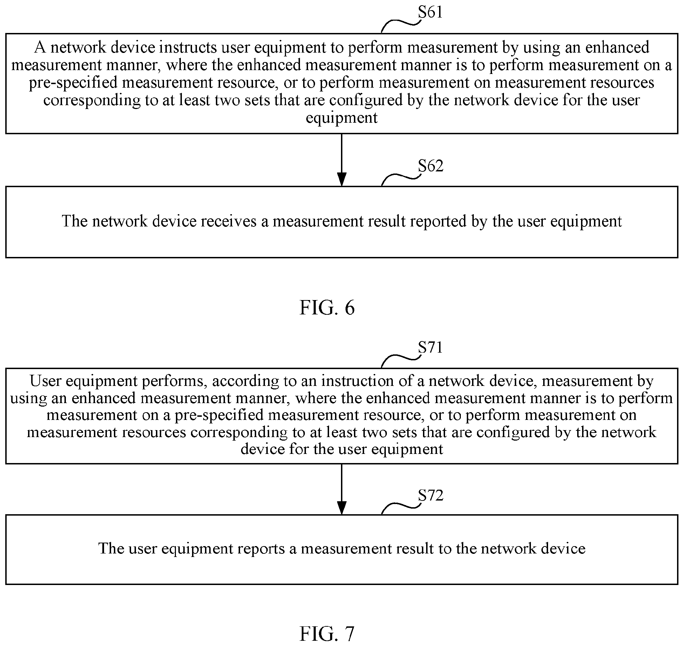

Based on a same inventive concept, an embodiment of the present invention further provides a measurement method on a side of a network device. As shown in FIG. 6, the method includes:
S61: A network device instructs user equipment to perform measurement by using an enhanced measurement manner.

In this step, the enhanced measurement manner is to perform measurement on a pre-specified measurement resource, or to perform measurement on measurement resources corresponding to at least two sets that are configured by the network device for the user equipment.

S62: The network device receives a measurement result reported by the user equipment.

In this embodiment of the present invention, a network device instructs user equipment to perform measurement by using an enhanced measurement manner, to enable the user equipment to perform measurement on a pre-specified measurement resource or perform measurement on measurement resources corresponding to at least two sets that are configured by the network device for the user equipment, and receives a measurement result reported by the user equipment. Because an enhanced measurement manner is used, accuracy of measurement and reliability of a measurement result are improved.

In a first preferred implementation manner, the enhanced measurement manner is to perform measurement on a pre-specified measurement resource. In the manner, in S61, the instructing, by a network device, user equipment to perform measurement by using an enhanced measurement manner includes:
carrying, by the network device, in measurement information configured for the user equipment, instruction information used to instruct the user equipment to perform measurement on the pre-specified measurement resource.

In a second preferred implementation manner, the enhanced measurement manner is to perform measurement on measurement resources corresponding to at least two sets that are configured by the network device for the user equipment. In the manner, values of interference to a serving cell from a neighboring cell on measurement resources corresponding to different sets of the at least two sets belong to different interference ranges.

In the manner, configuring, by the network device, the at least two sets for the user equipment includes:
configuring, by the network device, at least two sets for serving cells on a same frequency of the user equipment; or,
configuring, by the network device, at least two sets for all serving cells on different frequencies of the user equipment; or,
configuring, by the network device, at least two sets for each serving cell on different frequencies of the user equipment.

In the manner, based on any embodiment in the foregoing, the configuring, by the network device, the at least two sets for the user equipment includes:
configuring, by the network device, at least two sets for neighboring cells on a same frequency of the user equipment; or,
configuring, by the network device, at least two sets for all neighboring cells on different frequencies of the user equipment; or,
configuring, by the network device, at least two sets for each neighboring cell on different frequencies of the user equipment.

In the manner, the at least two sets include:
a measurement resource set used to represent a measurement resource that is configured by the network device for the user equipment; and/or,
a measurement reporting set used to represent information that is configured by the network device for the user equipment and that is related to reporting of a measurement result.

The information that is related to reporting of a measurement result includes information such as a measurement type, a reporting location, and a reporting manner.

During implementation, if the at least two sets include the measurement resource set, in S61, the instructing, by a network device, user equipment to perform measurement by using an enhanced measurement manner includes:
sending, by the network device to the user equipment, the configured measurement resource set and a measurement resource included in each measurement resource set; or,
indicating, by the network device by using PDCCH or MAC signaling, a measurement resource set corresponding to a measurement resource configured by the network device for the user equipment; or,
when a measurement resource is scheduled by using PDCCH or MAC signaling, indicating, by the network device, a measurement resource set corresponding to the scheduled measurement resource.

During implementation, if the at least two sets include the measurement reporting set, in S61, the instructing, by a network device, user equipment to perform measurement by using an enhanced measurement manner includes:
when a measurement resource is scheduled by using PDCCH or MAC signaling, indicating, by the network device, a measurement reporting set corresponding to a measurement result of the scheduled measurement resource; or,
indicating, by the network device by using PDCCH or MAC signaling, a measurement reporting set corresponding to a measurement result of a measurement resource that is configured by the network device for the user equipment.

During implementation, if the at least two sets include the measurement resource set and the measurement reporting set, in S61, the instructing, by a network device, user equipment to perform measurement by using an enhanced measurement manner includes:
sending, by the network device, a correspondence between the configured measurement resource set and the configured measurement reporting set to the user equipment, and indicating, by using PDCCH or MAC signaling, a measurement resource set corresponding to a measurement resource configured by the network device for the user equipment; or,
sending, by a network device, a correspondence between the configured measurement resource set and the configured measurement reporting set to the user equipment, and when a measurement resource is scheduled by using PDCCH or MAC signaling, indicating a measurement resource set corresponding to the scheduled measurement resource; or,
indicating, by the network device by using PDCCH or MAC signaling, a measurement resource set corresponding to a measurement resource configured by the network device for the user equipment and a correspondence between the configured measurement resource set and the configured measurement reporting set; or,
when a measurement resource is scheduled by using PDCCH or MAC signaling, indicating, by the network device, a measurement resource set corresponding to the scheduled measurement resource and a correspondence between the configured measurement resource set and the configured measurement reporting set.

Based on any embodiment in the foregoing, in S61, the instructing, by a network device, user equipment to perform measurement by using an enhanced measurement manner includes:
for an unlicensed spectrum, instructing, by the network device, the user equipment to perform measurement by using the enhanced measurement manner.

Based on a same inventive concept, an embodiment of the present invention further provides a measurement method on a side of user equipment. Parts that are the same as those of the user equipment shown in FIG. 3 are no longer described herein. For details, refer to the description of the user equipment shown in FIG. 3. As shown in FIG. 7, the method includes:
S71: User equipment performs, according to an instruction of a network device, measurement by using an enhanced measurement manner.
S72: The user equipment reports a measurement result to the network device.

The enhanced measurement manner is to perform measurement on a pre-specified measurement resource, or to perform measurement on measurement resources corresponding to at least two sets that are configured by the network device for the user equipment.

In a first preferred implementation manner, the enhanced measurement manner is to perform measurement on a pre-specified measurement resource. In the manner, in S71, the performing, by user equipment according to an instruction of a network device, measurement by using an enhanced measurement manner includes:
after the user equipment receives measurement information configured by the network device for the user equipment, if the measurement information carries instruction information used to instruct the user equipment to perform measurement on a pre-specified measurement resource, performing, by the user equipment, measurement on the pre-specified measurement resource.

In a second preferred implementation manner, the enhanced measurement manner is to perform measurement on measurement resources corresponding to at least two sets that are configured by the network device for the user equipment. In the manner, values of interference to a serving cell from a neighboring cell on measurement resources corresponding to different sets of the at least two sets belong to different interference ranges.

In the manner, the at least two sets include:
a measurement resource set used to represent a measurement resource that is configured by the network device for the user equipment; and/or,
a measurement reporting set used to represent information that is configured by the network device for the user equipment and that is related to reporting of a measurement result.

During implementation, if the at least two sets include the measurement resource set, in S71, the performing, by user equipment according to an instruction of a network device, measurement by using an enhanced measurement manner includes:
after receiving the measurement resource set that is sent by the network device and that is configured by the network device and a measurement resource included in each measurement resource set, separately performing, by the user equipment, measurement on the measurement resource corresponding to each measurement resource set; or,
after receiving, by using physical downlink control channel PDCCH or MAC signaling, a measurement resource set that is indicated by the network device and that corresponds to a measurement resource configured by the network device for the user equipment, separately performing, by the user equipment, measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource, separately performing, by the user equipment, measurement on the measurement resource corresponding to each measurement resource set.

During implementation, if the at least two sets include the measurement reporting set, in S71, the performing, by user equipment according to an instruction of a network device, measurement by using an enhanced measurement manner includes:
after receiving, by using PDCCH or MAC signaling, a measurement reporting set that is indicated by the network device when the network device schedules a measurement resource and that corresponds to a measurement result of the scheduled measurement resource, separately performing, by the user equipment, measurement on the measurement resource corresponding to each measurement reporting set; or,
after receiving, by using PDCCH or MAC signaling, a measurement reporting set that is indicated by the network device and that corresponds to a measurement result of a measurement resource configured by the network device for the user equipment, separately performing, by the user equipment, measurement on the measurement resource corresponding to each measurement reporting set.

Correspondingly, in S72, the reporting, by the user equipment, a measurement result to the network device includes:
separately reporting, by the user equipment to the network device according to each measurement reporting set, the measurement result of the measurement resource corresponding to each measurement reporting set.

During implementation, if the at least two sets include the measurement resource set and the measurement reporting set, in S71, the performing, by user equipment according to an instruction of a network device, measurement by using an enhanced measurement manner includes:
after receiving a correspondence that is sent by the network device and that is between the measurement resource set configured by the network device and the measurement reporting set configured by the network device, and receiving, by using PDCCH or MAC signaling, a measurement resource set that is indicated by the network device and that corresponds to a measurement resource configured by the network device for the user equipment, separately performing, by the user equipment, measurement on the measurement resource corresponding to each measurement resource set; or,
after receiving a correspondence that is sent by the network device and that is between the measurement resource set configured by the network device and the measurement reporting set configured by the network device, and receiving, by using PDCCH or MAC signaling, a measurement resource set that is indicated by the network device when the network device schedules a measurement resource and that corresponds to the scheduled measurement resource, separately performing, by the user equipment, measurement on the measurement resource corresponding to each measurement resource set; or,
after receiving, by using PDCCH or MAC signaling, a measurement resource set corresponding to a measurement resource configured by the network device for the user equipment and a correspondence between the measurement resource set configured by the network device and the measurement reporting set configured by the network device, separately performing, by the user equipment, measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource and a correspondence between the measurement resource set configured by the network device and the measurement reporting set configured by the network device, separately performing, by the user equipment, measurement on the measurement resource corresponding to each measurement resource set.

Correspondingly, in S72, the reporting, by the user equipment, a measurement result to the network device includes:
determining, by the user equipment according to a correspondence between the measurement resource set configured by the network device and the measurement reporting set configured by the network device, a measurement reporting set corresponding to each measurement resource set; and
separately reporting, by the user equipment to the network device according to the measurement reporting set corresponding to each measurement resource set, a measurement result of the measurement resource corresponding to each measurement resource set.

Based on any embodiment in the foregoing, in S71, the performing, by user equipment according to an instruction of a network device, measurement by using an enhanced measurement manner includes:
performing, by the user equipment according to the instruction of the network device, measurement on an unlicensed spectrum by using an enhanced measurement manner.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A network device, wherein the network device comprises:
a processing module, configured to instruct user equipment to perform measurement by using an enhanced measurement manner, wherein the enhanced measurement manner is to perform measurement on a pre-specified measurement resource, or to perform measurement on a measurement resource corresponding to at least two sets that are configured by the processing module for the user equipment; and
a receiving module, configured to receive a measurement result reported by the user equipment.

2. The network device according to claim 1, wherein if the enhanced measurement manner is to perform measurement on the pre-specified measurement resource, that the processing module instructs the user equipment to perform measurement by using an enhanced measurement manner comprises:
adding, to measurement information configured for the user equipment, instruction information used to instruct the user equipment to perform measurement on the pre-specified measurement resource.

3. The network device according to claim 2, wherein at least one subframe in which the pre-specified measurement resource is located is:
all subframes within a specified measurement period; or,
some consecutive subframes within a specified measurement period; or,
an even-numbered subframe within a specified measurement period; or,
an odd-numbered subframe within a specified measurement period; or,
subframes separated by a specified interval within a specified measurement period; or,
a specified subframe within each sub-period within a specified measurement period, wherein the measurement period is divided into at least two sub-periods according to a specified time interval.

4. The network device according to claim 1, wherein values of interference to a serving cell from a neighboring cell on measurement resources corresponding to different sets of the at least two sets belong to different interference ranges.

5. The network device according to any one of claims 1 to 4, wherein that the processing module configures at least two sets for the user equipment comprises:
configuring at least two sets for serving cells on a same frequency of the user equipment; or,
configuring at least two sets for all serving cells on different frequencies of the user equipment; or,
configuring at least two sets for each serving cell on different frequencies of the user equipment.

6. The network device according to any one of claims 1 to 5, wherein that the processing module configures at least two sets for the user equipment comprises:
configuring at least two sets for neighboring cells on a same frequency of the user equipment; or,
configuring at least two sets for all neighboring cells on different frequencies of the user equipment; or,
configuring at least two sets for each neighboring cell on different frequencies of the user equipment.

7. The network device according to any one of claims 1 to 6, wherein the at least two sets comprise:
a measurement resource set used to represent a measurement resource that is configured by the processing module for the user equipment; and/or,
a measurement reporting set used to represent information that is configured by the processing module for the user equipment and that is related to reporting of a measurement result.

8. The network device according to claim 7, wherein if the at least two sets comprise the measurement resource set, that the processing module instructs the user equipment to perform measurement by using an enhanced measurement manner comprises:
sending, to the user equipment, the configured measurement resource set and a measurement resource comprised in each measurement resource set; or,
indicating, by using physical downlink control channel PDCCH or MAC signaling, a measurement resource set corresponding to a measurement resource configured by the processing module for the user equipment; or
when a measurement resource is scheduled by using PDCCH or MAC signaling, indicating a measurement resource set corresponding to the scheduled measurement resource.

9. The network device according to claim 7, wherein if the at least two sets comprise the measurement reporting set, that the processing module instructs the user equipment to perform measurement by using an enhanced measurement manner comprises:
when a measurement resource is scheduled by using PDCCH or MAC signaling, indicating a measurement reporting set corresponding to a measurement result of the scheduled measurement resource; or,
indicating, by using PDCCH or MAC signaling, a measurement reporting set corresponding to a measurement result of a measurement resource that is configured by the processing module for the user equipment.

10. The network device according to claim 7, wherein if the at least two sets comprise the measurement resource set and the measurement reporting set, that the processing module instructs the user equipment to perform measurement by using an enhanced measurement manner comprises:
sending a correspondence between the configured measurement resource set and the configured measurement reporting set to the user equipment, and indicating, by using PDCCH or MAC signaling, a measurement resource set corresponding to a measurement resource configured by the processing module for the user equipment; or,
sending a correspondence between the configured measurement resource set and the configured measurement reporting set to the user equipment, and when a measurement resource is scheduled by using PDCCH or MAC signaling, indicating a measurement resource set corresponding to the scheduled measurement resource; or,
indicating, by using PDCCH or MAC signaling, a measurement resource set corresponding to a measurement resource configured by the processing module for the user equipment and a correspondence between the configured measurement resource set and the configured measurement reporting set; or,
when a measurement resource is scheduled by using PDCCH or MAC signaling, indicating a measurement resource set corresponding to the scheduled measurement resource and a correspondence between the configured measurement resource set and the configured measurement reporting set.

11. The network device according to any one of claims 1 to 10, wherein that the processing module instructs the user equipment to perform measurement by using an enhanced measurement manner comprises:
for an unlicensed spectrum, instructing the user equipment to perform measurement by using the enhanced measurement manner.

12. The user equipment according to any one of claims 1 to 11, wherein the measurement resource comprises: at least one of a cell-specific reference signal CRS, a cell discovery reference signal DRS, a primary synchronization signal PSS, a secondary synchronization signal SSS, a channel state information-reference signal CSI-RS, or channel reference information-interference measurement CSI-IM.

13. User equipment, wherein the user equipment comprises:
a measurement module, configured to perform, according to an instruction of a network device, measurement by using an enhanced measurement manner; and
a reporting module, configured to report a measurement result to the network device, wherein
the enhanced measurement manner is to perform measurement on a pre-specified measurement resource, or to perform measurement on measurement resources corresponding to at least two sets that are configured by the network device for the user equipment.

14. The user equipment according to claim 13, wherein the measurement module is configured to:
after receiving measurement information configured by the network device for the user equipment, if the measurement information carries instruction information used to instruct the user equipment to perform measurement on a pre-specified measurement resource, perform measurement on the pre-specified measurement resource.

15. The user equipment according to claim 14, wherein at least one subframe in which the pre-specified measurement resource is located is:
all subframes within a specified measurement period; or,
some consecutive subframes within a specified measurement period; or,
an even-numbered subframe within a specified measurement period; or,
an odd-numbered subframe within a specified measurement period; or,
subframes separated by a specified interval within a specified measurement period; or,
a specified subframe within each sub-period within a specified measurement period, wherein the measurement period is divided into at least two sub-periods according to a specified time interval.

16. The user equipment according to claim 13, wherein values of interference to a serving cell from a neighboring cell on measurement resources corresponding to different sets of the at least two sets belong to different interference ranges.

17. The user equipment according to any one of claims 13 to 16, wherein the at least two sets comprise:
a measurement resource set used to represent a measurement resource that is configured by the network device for the user equipment; and/or,
a measurement reporting set used to represent information that is configured by the network device for the user equipment and that is related to reporting of a measurement result.

18. The user equipment according to claim 17, wherein if the at least two sets comprise the measurement resource set, the measurement module is configured to:
after receiving the measurement resource set that is sent by the network device and that is configured by the network device and a measurement resource comprised in each measurement resource set, separately perform measurement on the measurement resource corresponding to each measurement resource set; or,
after receiving, by using physical downlink control channel PDCCH or MAC signaling, a measurement resource set that is indicated by the network device and that corresponds to a measurement resource configured by the network device for the user equipment, separately perform measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource, separately perform measurement on the measurement resource corresponding to each measurement resource set.

19. The user equipment according to claim 17, wherein if the at least two sets comprise the measurement reporting set, the measurement module is configured to:
after receiving, by using PDCCH or MAC signaling, a measurement reporting set that is indicated by the network device when the network device schedules a measurement resource and that corresponds to measurement results of the scheduled measurement resource, separately perform measurement on the measurement resource corresponding to each measurement reporting set; or,
after receiving, by using PDCCH or MAC signaling, a measurement reporting set that is indicated by the network device and that corresponds to a measurement result of a measurement resource configured by the network device for the user equipment, separately perform measurement on the measurement resource corresponding to each measurement reporting set.

20. The user equipment according to claim 19, wherein the reporting module is configured to:
separately report, to the network device according to each measurement reporting set, the measurement result of the measurement resource corresponding to each measurement reporting set.

21. The user equipment according to claim 17, wherein if the at least two sets comprise the measurement resource set and the measurement reporting set, the measurement module is configured to:
after receiving a correspondence that is sent by the network device and that is between the measurement resource set configured by the network device and the measurement reporting set configured by the network device, and receiving, by using PDCCH or MAC signaling, a measurement resource set that is indicated by the network device and that corresponds to a measurement resource configured by the network device for the user equipment, separately perform measurement on the measurement resource corresponding to each measurement resource set; or,
after receiving a correspondence that is sent by the network device and that is between the measurement resource set configured by the network device and the measurement reporting set configured by the network device, and receiving, by using PDCCH or MAC signaling, a measurement resource set that is indicated by the network device when the network device schedules a measurement resource and that corresponds to the scheduled measurement resource, separately perform measurement on the measurement resource corresponding to each measurement resource set; or,
after receiving, by using PDCCH or MAC signaling, a measurement resource set corresponding to a measurement resource configured by the network device for the user equipment and a correspondence between the measurement resource set configured by the network device and the measurement reporting set configured by the network device, separately perform measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource and a correspondence between the measurement resource set configured by the network device and the measurement reporting set configured by the network device, separately perform measurement on the measurement resource corresponding to each measurement resource set.

22. The user equipment according to claim 21, wherein the reporting module is configured to:
determine, according to a correspondence between the measurement resource set configured by the network device and the measurement reporting set configured by the network device, a measurement reporting set corresponding to each measurement resource set; and separately report, to the network device according to the measurement reporting set corresponding to each measurement resource set, a measurement result of the measurement resource corresponding to each measurement resource set.

23. The user equipment according to any one of claims 13 to 22, wherein the measurement module is configured to: perform, according to the instruction of the network device, measurement on an unlicensed spectrum by using an enhanced measurement manner.

24. The user equipment according to any one of claims 13 to 23, wherein the measurement resource comprises: at least one of a cell-specific reference signal CRS, a cell discovery reference signal DRS, a primary synchronization signal PSS, a secondary synchronization signal SSS, a channel state information-reference signal CSI-RS, or channel reference information-interference measurement CSI-IM.

25. A measurement method, wherein the method comprises:
instructing, by a network device, user equipment to perform measurement by using an enhanced measurement manner; and
receiving, by the network device, a measurement result reported by the user equipment, wherein
the enhanced measurement manner is to perform measurement on a pre-specified measurement resource, or to perform measurement on measurement resources corresponding to at least two sets that are configured by the network device for the user equipment.

26. The method according to claim 25, wherein values of interference to a serving cell from a neighboring cell on measurement resources corresponding to different sets of the at least two sets belong to different interference ranges.

27. The method according to claim 25 or 26, wherein configuring, by the network device, the at least two sets for the user equipment comprises:
configuring, by the network device, at least two sets for serving cells on a same frequency of the user equipment; or,
configuring, by the network device, at least two sets for all serving cells on different frequencies of the user equipment; or,
configuring, by the network device, at least two sets for each serving cell on different frequencies of the user equipment.

28. The method according to any one of claims 25 to 27, wherein the configuring, by the network device, the at least two sets for the user equipment comprises:
configuring, by the network device, at least two sets for neighboring cells on a same frequency of the user equipment; or,
configuring, by the network device, at least two sets for all neighboring cells on different frequencies of the user equipment; or,
configuring, by the network device, at least two sets for each neighboring cell on different frequencies of the user equipment.

29. The method according to any one of claims 25 to 28, wherein the at least two sets comprise:
a measurement resource set used to represent a measurement resource that is configured by the network device for the user equipment; and/or,
a measurement reporting set used to represent information that is configured by the network device for the user equipment and that is related to reporting of a measurement result.

30. The method according to claim 29, wherein if the at least two sets comprise the measurement resource set, the instructing, by a network device, user equipment to perform measurement by using an enhanced measurement manner comprises:
sending, by the network device to the user equipment, the configured measurement resource set and a measurement resource comprised in each measurement resource set; or,
indicating, by the network device by using physical downlink control channel PDCCH or MAC signaling, a measurement resource set corresponding to a measurement resource configured by the network device for the user equipment; or
when a measurement resource is scheduled by using PDCCH or MAC signaling, indicating, by the network device, a measurement resource set corresponding to the scheduled measurement resource.

31. The method according to claim 29, wherein if the at least two sets comprise the measurement reporting set, the instructing, by a network device, user equipment to perform measurement by using an enhanced measurement manner comprises:
when a measurement resource is scheduled by using PDCCH or MAC signaling, indicating, by the network device, a measurement reporting set corresponding to a measurement result of the scheduled measurement resource; or,
indicating, by the network device by using PDCCH or MAC signaling, a measurement reporting set corresponding to a measurement result of a measurement resource that is configured by the network device for the user equipment.

32. The method according to claim 29, wherein if the at least two sets comprise the measurement resource set and the measurement reporting set, the instructing, by a network device, user equipment to perform measurement by using an enhanced measurement manner comprises:
sending, by the network device, a correspondence between the configured measurement resource set and the configured measurement reporting set to the user equipment, and indicating, by using PDCCH or MAC signaling, a measurement resource set corresponding to a measurement resource configured by the network device for the user equipment; or,
sending, by the network device, a correspondence between the configured measurement resource set and the configured measurement reporting set to the user equipment, and when a measurement resource is scheduled by using PDCCH or MAC signaling, indicating a measurement resource set corresponding to the scheduled measurement resource; or,
indicating, by the network device by using PDCCH or MAC signaling, a measurement resource set corresponding to a measurement resource configured by the network device for the user equipment and a correspondence between the configured measurement resource set and the configured measurement reporting set; or,
when a measurement resource is scheduled by using PDCCH or MAC signaling, indicating, by the network device, a measurement resource set corresponding to the scheduled measurement resource and a correspondence between the configured measurement resource set and the configured measurement reporting set.

33. A measurement method, wherein the method comprises:
performing, by user equipment according to an instruction of a network device, measurement by using an enhanced measurement manner; and
reporting, by the user equipment, a measurement result to the network device, wherein
the enhanced measurement manner is to perform measurement on a pre-specified measurement resource, or to perform measurement on measurement resources corresponding to at least two sets that are configured by the network device for the user equipment.

34. The method according to claim 33, wherein values of interference to a serving cell from a neighboring cell on measurement resources corresponding to different sets of the at least two sets belong to different interference ranges.

35. The method according to claim 33 or 34, wherein the at least two sets comprise:
a measurement resource set used to represent a measurement resource that is configured by the network device for the user equipment; and/or,
a measurement reporting set used to represent information that is configured by the network device for the user equipment and that is related to reporting of a measurement result.

36. The method according to claim 35, wherein the performing, by user equipment according to an instruction of a network device, measurement by using an enhanced measurement manner comprises:
after receiving the measurement resource set that is sent by the network device and that is configured by the network device and a measurement resource comprised in each measurement resource set, separately performing, by the user equipment, measurement on the measurement resource corresponding to each measurement resource set; or,
after receiving, by using physical downlink control channel PDCCH or MAC signaling, a measurement resource set that is indicated by the network device and that corresponds to a measurement resource configured by the network device for the user equipment, separately performing, by the user equipment, measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource, separately performing, by the user equipment, measurement on the measurement resource corresponding to each measurement resource set.

37. The method according to claim 35, wherein the performing, by user equipment according to an instruction of a network device, measurement by using an enhanced measurement manner comprises:
after receiving, by using PDCCH or MAC signaling, a measurement reporting set that is indicated by the network device when the network device schedules a measurement resource and that corresponds to measurement results of the scheduled measurement resource, separately performing, by the user equipment, measurement on the measurement resource corresponding to each measurement reporting set; or,
after receiving, by using PDCCH or MAC signaling, a measurement reporting set that is indicated by the network device and that corresponds to a measurement result of a measurement resource configured by the network device for the user equipment, separately performing, by the user equipment, measurement on the measurement resource corresponding to each measurement reporting set.

38. The method according to claim 37, wherein the reporting, by the user equipment, a measurement result to the network device comprises:
separately reporting, by the user equipment to the network device according to each measurement reporting set, the measurement result of the measurement resource corresponding to each measurement reporting set.

39. The method according to claim 35, wherein the performing, by user equipment according to an instruction of a network device, measurement by using an enhanced measurement manner comprises:
after receiving a correspondence that is sent by the network device and that is between the measurement resource set configured by the network device and the measurement reporting set configured by the network device, and receiving, by using PDCCH or MAC signaling, a measurement resource set that is indicated by the network device and that corresponds to a measurement resource configured by the network device for the user equipment, separately performing, by the user equipment, measurement on the measurement resource corresponding to each measurement resource set; or,
after receiving a correspondence that is sent by the network device and that is between the measurement resource set configured by the network device and the measurement reporting set configured by the network device, and receiving, by using PDCCH or MAC signaling, a measurement resource set that is indicated by the network device when the network device schedules a measurement resource and that corresponds to the scheduled measurement resource, separately performing, by the user equipment, measurement on the measurement resource corresponding to each measurement resource set; or,
after receiving, by using PDCCH or MAC signaling, a measurement resource set corresponding to a measurement resource configured by the network device for the user equipment and a correspondence between the measurement resource set configured by the network device and the measurement reporting set configured by the network device, separately performing, by the user equipment, measurement on the measurement resource corresponding to each measurement resource set; or,
after receiving, by using PDCCH or MAC signaling, a measurement resource set that is indicated by the network device when the network device schedules a measurement resource and that corresponds to the scheduled measurement resource and a correspondence between the measurement resource set configured by the network device and the measurement reporting set configured by the network device, separately performing, by the user equipment, measurement on the measurement resource corresponding to each measurement resource set.

40. The method according to claim 39, wherein the reporting, by the user equipment, a measurement result to the network device comprises:
determining, by the user equipment according to a correspondence between the measurement resource set configured by the network device and the measurement reporting set configured by the network device, a measurement reporting set corresponding to each measurement resource set; and
separately reporting, by the user equipment to the network device according to the measurement reporting set corresponding to each measurement resource set, a measurement result of the measurement resource corresponding to each measurement resource set.
